(19) Europäisches Patentamt
European Patent Office
Office européen des brevets

(11) Veröffentlichungsnummer: **0 000 608**
**B1**

(12) # EUROPÄISCHE PATENTSCHRIFT

(45) Veröffentlichungstag der Patentschrift: **08.07.81**

(21) Anmeldenummer: **78200107.7**

(22) Anmeldetag: **18.07.78**

(51) Int. Cl.³: **C 08 F 220/32,**
C 09 D 3/80, C 08 G 18/62

(54) **Verfahren zur Herstellung von in organischen Lösungsmitteln löslichen, hydroxylgruppenhaltigen Copolymerisaten sowie Überzugsmasse bzw. Bindemittel für Lacke.**

(30) Priorität: **20.07.77 DE 2732693**

(43) Veröffentlichungstag der Anmeldung:
**07.02.79 Patentblatt 79/3**

(45) Bekanntmachung des Hinweises auf die Patenterteilung:
**08.07.81 Patentblatt 81/27**

(84) Benannte Vertragsstaaten:
**DE FR GB NL SE**

(56) Entgegenhaltungen:
**DE - A - 2 021 178**
**FR - A - 2 080 396**

(73) Patentinhaber: **HOECHST AKTIENGESELLSCHAFT**
**Postfach 80 03 20**
**D-6230 Frankfurt/Main 80 (DE)**

(72) Erfinder: **Katsimbas, Themistoklis**
**Gryphiusstrasse 3**
**D-2000 Hamburg 60 (DE)**

**EP 0 000 608 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von in organischen Lösungsmitteln löslichen, hydroxylgruppenhaltigen Copolymerisaten sowie Überzugsmasse bzw. Bindemittel für Lacke.

Es sind zahlreiche Vorschläge bekanntgeworden, lösungsmittelbeständige und alkalibeständige Lacke durch Umsetzen von Polyisocyanaten und hydroxylgruppenhaltigen Mischpolymerisaten herzustellen und zu Überzügen zu verarbeiten. In der deutschen Auslegeschrift 12 47 006 ist ein Verfahren zur Herstellung alkalifester Flächengebilde nach dem Polyisocyanat-Polyadditionsverfahren beschrieben, die aus hydroxylgruppenhaltigen Mischpolymerisaten und Polyisocyanaten erhalten werden, die jedoch nach einer drei- bis viertägigen Reaktionszeit bei 20°C nicht ausreichend wasserbeständig sind. Diese nach diesem bekannten Verfahren erhaltenen Überzüge eignen sich daher nicht als Decklacke für wetterbeständige Außenlackierungen, da nach kürzester Zeit Blasenbildung auftritt und die Haftfestigkeit des Lackes auf den verschiedenen metallischen Untergründen nachläßt und dadurch sich der Lack vom Untergrund abhebt.

Es ist auch bekannt, daß Polyhydroxylverbindungen von Polyolen mit Polyisocyanaten zu härten sind, um vernetzte Lacküberzüge mit guten Beständigkeitseigenschaften zu erhalten. Diese Kombinationen zeigen ebenfalls eine zu geringe Wasserbeständigkeit und geringere Wetterbeständigkeit der ausgehärteten Lackschichten.

In der französischen Patentschrift 1 556 309 ist ein Überzugsmittel beschrieben, welches Lösungsmittel enthält und als filmbildende Bestandteile

A. ein Copolymeres, bestehend aus

1. 2—50 Gew.-Teilen eines Additionsproduktes im Verhältnis 1:1 einer Carboxylgruppe einer $\alpha,\beta$-äthylenisch ungesättigten Säure und einer Epoxydgruppe eines Glycidylesters einer aliphatischen Carbonsäure mit tertiären C-Atomen, bei dem die aliphatische tert. Gruppe 4—26 C-Atome enthält, und
2. 98—50 Gew.-Teile ungesättigter copolymerisierbarer Monomerer, und wobei die Gesamtmenge von 1 und 2 sich zu 100 Gew.-Teile ergänzt und

B. mindestens ein Polyisocyanat, welches mindestens 2 Isocyanatgruppen in seinem Molekül enthält und wobei das Polyisocyanat zu dem Copolymeren in einer Menge von 0,2—5 Äquivalenten, bezogen auf die Hydroxylgruppen des Copolymeren, enthalt

Wie die Beispiele in dieser französischen Patentschrift in der Tabelle 1 auf Seite 5 zeigen, enthalten die dort beschriebenen Mischpolymerisate mindestens ein Acrylat oder ein Methacrylat — in den meisten Fällen sogar Methacrylate und Acrylate gleichzeitig anpolymerisiert.

Diese bekannten Überzugsmittel liefern jedoch Filme, die sehr flexibel sind und keine große Lösungsmittelbeständigkeit besitzen.

In der französischen Patentschrift 13 90 572 ist ein Verfahren zur Herstellung von Copolymeren beschrieben, bei dem man in einem Lösungsmittel eine $\alpha,\beta$-ungesättigte Carbonsäure oder eines ihrer Derivate mit einer oder mehreren anderen Vinylmonomeren in Gegenwart eines Katalysators copolymerisiert und gleichzeitig oder nacheinander das Reaktionsprodukt mit einem Glycidylester dem Reaktionsschema:

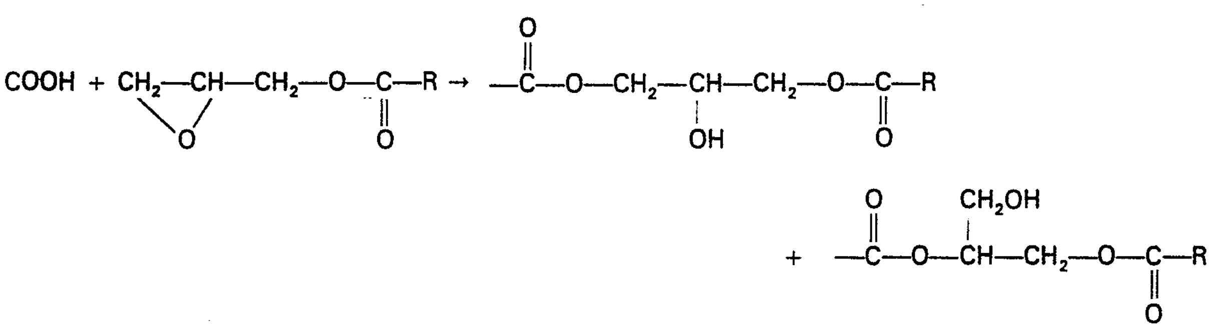

umsetzt, wobei R ein aliphatischer oder aromatischer Rest ist, der auch substituiert sein kann, der entweder gesättigt ist oder eine oder mehrere äthylenisch ungesättigte Bindungen enthält.

Wie die Beispiele dieser französischen Patentschrift zeigen, enthalten die Mischpolymerisate neben dem Styrol mehrere Acrylate oder Gemische aus Acrylaten und Methacrylaten oder mehrere Methacrylate. Außerdem ist im Resumée dieser französischen Patentschrift unter dem Buchstaben D erwähnt, daß die dort beschriebenen Copolymeren für Uberzugsmittel Verwendung finden können, die durch Zusammenmischen mit einem Isocyanatpräpolymeren oder einem Polyisocyanat erhalten worden sind. Auch die Überzugsmittel der dort geschilderten Art weisen nach der Aushärtung eine relativ große Elastizität auf und sind daher durch Lösungsmittel noch angreifbar.

In der USA-Patentschrift 33 30 814 sind bereits Hydroxylgruppen enthaltende Copolymere beschrieben, die aus monoäthylenisch ungesättigten Monomeren aufgebaut sind, eine Säurezahl bis 40 aufweisen und mindestens 5 Gewichtsprozent äthylenisch ungesättigte Carbonsäureeinheiten mit aktiven Wasserstoffatomen besitzen, die eine Struktur aus den ausgesuchten Gruppierungen, bestehend aus

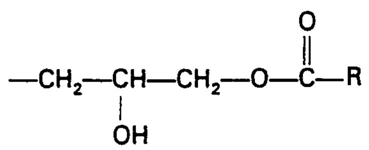

und

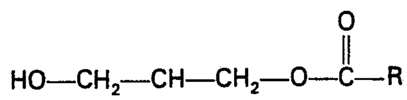

besitzen, worin R ein tertiären aliphatischer Kohlenwasserstoffrest mit der Struktur

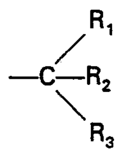

ist, worin $R_1$—$CH_3$ und $R_2$ und $R_3$ Alkylgruppen mit 1 bis 12 Kohlenstoffatomen darstellen und wobei nach Anspruch 6 die monoäthylenisch ungesättigten Monomeren Styrol und Acrylsäure sind und das Polymere eine Säurezahl von 5 bis 40 besitzt.

Diese bekannten Copolymere können allein als einbrennbare Überzugsmittel (a.a.O. Spalte 1, Zeilen 56—61) Verwendung finden. Es wird auch die Kombination dieser Copolymerisate mit Aminoplastharzen (a.a.O. Spalte 3, Zeilen 52—62), Phenolformaldehydharzen (a.a.O. Spalte 3, Zeilen 63—66) verwendet; zusätzlich können Epoxypolyäther (a.a.O. Spalte 3, Zeilen 67—75) mitverwendet werden. Diese Überzugsmittel werden 30 bis 120 Minuten bei 121 bis 205°C eingebrannt. Jedoch wird die Verwendung dieser Copolymerisate zusammen mit Polyisocyanaten nicht in Betracht gezogen. Außerdem enthalten diese auch keine einpolymerisierten ungesättigten Fettsäuren.

In der DT—AS 20 21 178 ist ein Verfahren zur Herstellung von Überzügen aus Polyhydroxylverbindungen auf der Basis von Hydroxylgruppen enthaltenden Mischpolymerisaten, die Umsetzungsprodukte aus Gemischen von polymerisierbaren Vinylverbindungen, die $\alpha,\beta$-äthylenisch ungesättigte Mono- oder Dicarbonsäuren und Styrol bzw. deren Derivate enthalten, und Glycidylestern sind sowie Polyisocyanaten in Lösungsmitteln ohne aktive Wasserstoffatome durch Formgebung unter Entfernen des Lösungsmittels beschrieben, welches dadurch gekennzeichnet ist, daß man

A. 70—94 Gew.-% hydroxylgruppenhaltige Mischpolymerisate, hergestellt aus:

a) 38—70 Gew.-% Styrol oder Alkylstyrol, deren Alkylgruppen 1 bis 3 Kohlenstoffatome aufweisen bzw. eines Gemisches solcher Alkylstyrole,

b) 3—15 Gew.-% einer $\alpha,\beta$-äthylenisch ungesättigten Mono- oder Dicarbonsäure und Umsetzung unter Veresterung mit

c) 10—40 Gew.-% Glycidylestern von $\alpha$-Alkylalkanmonocarbonsäuren und/oder $\alpha,\alpha$-Dialkylalkanmonocarbonsäuren der Summenformel $C_{12-14}H_{22-26}O_3$, wobei die Mengen der Verbindungen a bis c sich zu 100 Gew.-% ergänzen müssen und die Komponente b in bezug auf die Komponente c in äquivalenten Verhältnissen zwischen der Carboxylgruppe und der Glycidylgruppe eingesetzt worden ist, do daß durch die Veresterung eine freie Hydroxylgruppe gebildet wurde und

B. 6—30 Gew.-% organisches Polyisocyanat, wobei A und B zusammen Zahlenwerte von 100 Gew.-% ergeben müssen, einsetzt.

Die erhaltenen Überzüge befriedigen jedoch nicht bei hohen Ansprüchen an die Oberflächenhärte, Flexibilität und Brillanz, insbesondere wenn die Vernetzung durch Umsetzung mit Melaminharzen bzw. Polyisocyanaten im unteren Mengenbereich erfolgt.

Aufgabe der vorliegenden Erfindung ist es, ein Verfahren zur Herstellung von Copolymerisaten zur Verfügung zu stellen, die bei der Verwendung zusammen mit Amino-aldehydharzen oder mit Polyisocyanaten Überzugsmittel herzustellen gestatten, deren Filme sich durch verbesserte Oberflächenhärte, insbesondere durch verbesserte Kratzfestigkeit, Flexibilität und Brillanz auszeichnen. Hervorzuheben ist, daß die neuen Copolymerisate gestatten, Lacke mit höherem Festkörpergehalt herzustellen. Außerdem fällt die Löslichkeit, der neuen Copolymerisate in aliphatischen Kohlenwasserstoffen mit einem Siedebereich von etwa 120 bis 200°C auf. Besonders bemerkenswert ist, daß bereits bei der Vernetzung mit organischen Polyisocyanaten unter Verwendung derselben im unteren Mengenbereich bei auf dieser Basis hergestellten lufttrocknenden Überzugsmitteln nach dem Auftragen Überzüge mit vorteilhaften Eigenschaften erhalten werden, für die bisher mit den herkömmlichen Copolymerisaten ein höherer Anteil von Polyisocyananten verwendet werden mußte.

Gegenstand der Erfindung ist ein Verfahren zur Herstellung von in organischen Lösungsmitteln löslichen hydroxylgruppenhaltigen Copolymerisaten in organischen Lösungsmitteln mit Acrylsäure und/oder Methacrylsäure, Alkylacrylaten, gegebenenfalls weiteren äthylenisch ungesättigten anpolymerisierbaren Monomeren unter gleichzeitiger Veresterung mit Glycidylestern von $\alpha$-Alkylalkanmonocarbonsäuren und/oder von $\alpha,\alpha$-Dialkylalkanmonocarbonsäuren mit der Summemformel $C_{12-14}H_{22-26}O_3$

durch Erhitzen in Anwesenheit eines Polymerisationsinitiators, dadurch gekennzeichnet, daß ein Gemisch A, bestehend aus einem inerten organischen Lösungsmittel und

a) 10—45 Gew.-% der Glycidylester auf 90 bis 200°C erhitzt wird und mit einem Gemisch B, bestehend aus
b) 2—15 Gew.-% der Acrylsäure und/oder Methacrylsäure,
c) 5—25 Gew.-% Hydroxylalkylacrylaten und/oder Hydroxyalkylmethacrylaten, vorzugsweise solchen mit 2 bis 4 Kohlenstoffatomen in der Alkylgruppe,
d) 20—78 Gew.-% der Alkylacrylate und/oder Alkylmethacrylate, vorzugsweise solchen mit 1 bis 8 Kohlenstoffatomen in der Alkylgruppe,
e) 5—30 Gew.-% ungesättigten Fettsäuren mit 11 bis 22 C-Atomen mit Jodzahlen von 90 bis 240, gegebenenfalls
f) weiteren äthylenisch ungesättigten anpolymerisierbaren Monomeren, und
g) 0—20 Gew.-%, vorzugsweise 0—10 Gew.-% gesättigten Fettsäuren

umgesetzt wird, wobei die Komponenten a, b, c, d, e und gegebenenfalls f und g in solchen Mengen eingesetzt werden, daß ihre Summe 100 Gew.-% ergibt.

Weitere bevorzugte Ausführungsform der Erfdindung sind in den Ansprüchen 2 bis 10 definiert.

Bei der Durchführung der Copolymerisation werden als inerte organische Lösungsmittel die in der Lackindustrie üblichen organischen Lösungsmittel einzeln oder im Gemisch wie Aceton, Methyläthyl-, -isopropyl- oder isobutylketone oder Cyclohexanon, n- oder Isopropanol, n-, tert.- oder Isobutanol, Essigsäureäthyl-, -butyl- oder -amylester, Glykolmonomethyl-, -äthyl- oder -butyläther, Glykolmonomethyl-, -äthyl- oder -butylätheracetat, Acetessigsäuremethyl, -äthyl-, -butylester, Milchsäurebutylester, Diacetonalkohol, Benzol, Toluol, Xylol und/oder aromatische Lösungsmittelgemische mit einem Siedebereich von 140 bis 200°C verwendet, vorzugsweise Kohlenwasserstoffe. Die aromatischen Lösungsmittel dürfen bis zu 50 Gew.-% aliphatische Verbindungen mit den Siedegrenzen von 140 bis 220°C enthalten. Bevorzugt sind solche organischen Lösungsmittel, einzeln oder im Gemisch, die einen Siedebereich von 140 bis 220°C besitzen. Soweit die Copolymerisate zur Herstellung von Überzugsmitteln dienen, die durch Polyisocyanate vernetzt werden, werden nur solche Lösungsmittel oder deren Gemische verwendet, die frei von aktiven Wasserstoffatomen sind.

Als Komponente a wird Glycidylester von $\alpha$-Alkylalkanmonocarbonsäuren und/oder $\alpha,\alpha$-Dialkylalkanmonocarbonsäuren folgender Summenformel $C_{12-14}H_{22-26}O_3$ einzeln oder im Gemisch verwendet. Dem Glycidylrest im Glycidylester der $\alpha$-Alkylalkanmonocarbonsäuren und/oder $\alpha,\alpha$-Dialkylalkanmonocarbonsäuren kommt die Summenformel $C_3H_5O$ zu. Die $\alpha$-Alkylalkansäuren- und $\alpha,\alpha$-Dialkylalkansäuren- Gemische stellen Monocarbonsäuren dar, die eine $C_9$-, $C_{10}$- und $C_{11}$-Kette enthalten.

Die Herstellungsverfahren zur Herstellung der vorstehend genannten $\alpha$-Alkylalkanmonocarbonsäuren basieren auf der Pionierarbeit des Dr. H. Koch von Max-Planck-Institut für Kohlenforschung in Mühlheim, Buindesrepublik Deutschland. Die Säuren sind völlig gesättigt und sind am $\alpha$-ständigen Kohlenstoffatom sehr stark substituiert. Säuren mit zwei Wasserstoffatomen am $\alpha$-Kohlenstoffatom sind nicht vorhanden und nur 6—7% dieser Säuren enthalten ein Wasserstoffatom. Außerden kommt zyklisches Material vor (Deutsche Farbenzeitschrift Heft 10/16. Jahrgang, Seite 435). Bevorzugt werden solche $\alpha$-Alkylalkanmonocarbonsäuren und/oder $\alpha,\alpha$-Dialkylalkanmonocarbonsäuren eingesetzt, die durch Umsetzung von Tripropylen, Kohlenmonoxyd und Wasser erhalten worden sind und fast nur aus stark verzweigten Monocarbonsäuren mit 10 C-Atomen bestehen.

Als Komponente c werden Hydroxyalkylacrylate und/oder Hydroxyalkylmethacrylate einzeln oder im Gemisch eingesetzt. Als Beispiel hierfür werden genannt Hydroxyalkylmethacrylate und -Acrylate mit 2 bis 4 Kohlenstoffatomen in der Alkylgruppe, wie Hydroxyäthylacrylat, Hydroxyäthylmethacrylat, Hydroxypropylmethacrylat, Hydroxy-n- und/oder -iso-propylacrylat, Hydroxy-n-butylacrylat und Hydroxy-n-butylmethacrylat.

Als Komponente d werden Alkylacrylate und/oder Alkylmethacrylate einzeln oder im Gemisch eingesetzt. Als Beispiel hierfür werden genannt Methylmethacrylat, Äthylmethacrylat, Propylmethacrylat, Butylmethacrylat, Hexylmethacrylat, Cyclohexylmethacrylat, 2-Äthylhexylmethacrylat und Methylacrylat, Äthylacrylat, n- und/oder iso-Propylacrylat, n- und/oder tertiäres Butylacrylat, Hexylacrylat und 2-Äthylhexylacrylat. Eine bevorzugte Gruppe von Monomeren sind Alkylacrylate und/oder Alkylmethacrylate mit 1 bis 8 Kohlenstoffatomen in der Alkylgruppe, da diese Polymerisate ein Produkt von hoher Qualität bilden.

Als ungesättigte Fettsäuren mit 11 bis 22 C-Atomen mit Jodzahlen von 90 bis 240 seien beispielhaft genannt Elaeostearinsäure, Licansäure, Parinarsäure, Linolensäure mit isolierten und konjugierten Doppelbindungen, Linolsäure mit isolierten und konjugierten Doppelbindungen. Weiterhin eignen sich als Zumischung zu den vorstehend genannten ungesättigten Fettsäuren solche mit 11 bis 22 Kohlenstoffatomen, die über mindestens eine ungesättigte Kohlenstoffdoppelbindung in der Kette verfügen, alle in natürlichen fetten Olen vorkommenden ungesättigten Fettsäuren, wie z.B. Palmitoleinsäure, Petroselinsäure, Ölsäure, Elaidinsäure, Erucasäure, Arachidonsäure, Clupanodonsäure usw. Der Gesamtgehalt dieser mindestens einfach ungesättigten Fettsäuren darf jedoch 30 Gew.-%, bezogen auf den Gesamtansatz, nicht überschreiten. Vorzugsweise liegt der Gehalt an diesen Fettsäuren jedoch unter 10 Gew.-%. Der Anteil an gesättigten Fettsäuren, der immer vorhanden ist, wenn Fettsäuregemische, wie sie durch Verseifung natürlicher Öle gewonnen werden, soll 20 Gew.-% nicht überschreiten, möglichst sogar unter 10 Gew.-% liegen. Als ungesättigte Fettsäuren können ferner die durch Dimerisierung bzw. Oligomerisierung ungesättigter Fettsäuren erhaltenen mehrbasischen Säuren sowie zyclisierte monobasische Säuren verwendet werden. Bevorzugt werden ungesättigte Fettsäuregemische verwendet, wie sie aus natürlichen pflanzlichen und tierischen ungesättigten Fetten durch Verseifung erhalten werden. Weiterhin sind aber auch geeignet: Fettsäuren aus dehydratisiertem Rizinusöl, die einen hohen Anteil an konjugierter Linolsäure enthalten.

Gegebenenfalls können als weitere äthylenisch ungesättigte anpolymerisierbare Monomeren folgende Verbindungen Vinylacetat, Vinylpropionat, Vinylisobutyrat, Vinylbutyrat, Vinyllaurat, Vinylstearat, Vinyllinoleat, Vinylbenzoat, Vinylchlorid, Vinylidenchlorid, Methylvinyläther, Isopropylvinyläther, Butylvinyläther, Acrylnitril, Acrylamid, Vinylester von $\alpha$-Alkylalkanmonocarbonsäuren und/oder $\alpha,\alpha$-Dialkylalkanmonocarbonsäuren, hauptsächlich bestehend aus tertiären Monocarbonsäuren mit 9 bis 11 Kohlenstoffatomen, die aus Olefinen mit 8 bis 10 Kohlenstoffatomen nach einer modifizierten Kochreaktion hergestellt worden sind und ähnliche Vinylester, bei deren Herstellung Olefine mit 9 Kohlenstoffatomen eingesetzt worden sind.

Das Herstellen der neuen Mischpolymerisate erfolgt durch Lösungsmittelpolymerisation, wobei man das Monomere a im Reaktionskessel gemeinsam mit den Lösungsmitteln erhitzt und dann die anderen Monomeren b bis e, in Anwesenheit der Initiatoren, eventuell auch in Gegenwart von Kettenabbrechern, zur Reaktion bringt, wobei die Kondensationsreaktion und Polymerisationsreaktion gemeinsam ablaufen. In bevorzugter Ausführungsform löst man den Glycidylester im Lösungsmittel und fügt bei erhöhter Temperatur — etwa 140 bis 170°C — die Monomeren b bis e mit den Initiatoren und Kettenabbrechern hinzu und kondensiert und polymerisiert gemeinsam. Als Initiatoren sind beispielsweise zu nennen: Azoverbindungen, Peroxydverbindungen, beispielsweise Benzoylperoxyd, Cumolhydroperoxyd, di.-tert.-Butylperoxyd, Dilauroylperoxyd, tert.-Butylhydroperoxyd, Dicumylperoxyd, Dibenzoylperoxyd, tert.-Butylhydroperoxyd, tert.-Butylperbenzoat, tert.-Butylperoctoat, tert.-Butylperisononanat. Die Umsetzungszeit beträgt im allgemeinen 5—12 Stunden.

Die verätherten(alkylierten) Aminoplaste werden durch Alkylierung eines Kondensats aus einem Aldehyd und Harnstoff, N,N'-Äthylenharnstoff, Dicyandiamid oder Aminotriazinen mit Cyclohexanol oder einem 1 bis 6 Kohlenstoffatome enthaltenden Alkanol erhalten. Es können sowohl wasserlösliche als auch wasserunlösliche alkylierte Aminoplaste verwendet werden, vorausgesetzt, daß sie in dem organischen Lösungsmittel löslich sind, das zur Herstellung der Überzugsmasse verwendet wird. Es können daher wasserlösliche Kondensate, wie die methylierten Dimethylolharnstoffkondensate verwendet werden, wenn die Alkylierung mit Alkanol weitgehend, und vorzugsweise im wesentlichen 100%ig, durchgeführt wurde, so daßa das alkylierte Kondensat im organischen Lösungsmittel löslich ist. Im allgemeinen sollten die alkylierten Aminoplaste wenigstens 80% und vorzugsweise 100% Methylolgruppen enthalten, die mit Cyclohexanol oder einem 1 bis 6 Kohlenstoffatome enthaltenden Alkanol alkyliert sind. Vorzugsweise werden Alkylierungsprodukte verwendet, die mit 3 bis 6 Kohlenstoffatome enthaltenden Alkanolen erhalten wurden. Die butylierten Produkte sind wegen ihrer größeren Verträglichkeit mit einer großen Anzahl von Mischpolymeren und Lösungsmitteln besonders vorteilhaft.

Für die Herstellung des Aminoplastes geeignete Aminotriazine sind Melamin, Acetoguanamin, Benzoguanamin, Formoguanamin, N-(t-Butyl)-melamin, N-(t-Octyl)-melamin, bei dem die t-Octylgruppe die Formel

$$-C(CH_3)_2-CH_2-C(CH_3)_3$$

hat, Ammelin, 2-Chlor-4,6-diamino-1,3,5-triazin, 2-Phenyl-p-hydroxy-4,6-diamino-1,3,5-triazin, 6-Methyl-2,4-diamino-1,3,5-triazin, 2,4-6-trihydrazin-1,3,5-triazin, 2,4,6-Triäthyltriamino-1,3,5-triazin oder N,N-Di-($C_1$—$C_4$)-alkylmelamine wie N,N-Dimethylmelamin. Als Aldehyd eignet sich zwar jeder beliebige Aldehyd, wie Acetaldehyd, Crotonaldehyd und Acrolein, doch werden die mit reversiblen Polymeren des Formaldehyds, wie Paraformaldehyd, hergestellten Kondensate bevorzugt.

Am bevorzugtesten wird als ein veräthertes Aminoaldehydharz ein Kondensationsprodukt aus einem Mol Melamin und 4 Molen Formaldehyd verwendet, wobei ca. zwei Methylolgruppen unveräthert und zwei weitere Methylolgruppen mit Methanol veräthert vorliegen und als 70 gew.-%ig in Isobutanol gelöstes Kondensationsprodukt ein Viskosität von 300 bis 600 Sekunden, gemessen im DIN-Becher mit einer 4 mm Auslauföffnung bei 20°C, aufweist. Als Polyisocyanate können beispielsweise eingesetzt werden: Toluylen-2,4-diisocyanat, Toluylen-2,6-diisocyanat, Cyclohexylen-1,4-diisocyanat, Diphenylmethan-4,4'-diisocyanat, Naphthylen-1,5-diisocyanat, 1-(Isocyanatophenyl)-äthylisocyanat oder die Xylylendiisocyanate, fluorsubstituierte Diisocyanate, Äthylenglykoldiphenyläther-2,2'-diisocyanat, Diäthylenglykoldiphenyläther-2,2'-diisocyanat, 1,1'-Dinaphthyl-2,2'-diisocyanat, Biphenyl-2,4'-diisocyanat, Biphenyl-4,4'-diisocyanat, Benzophenon-3,3'-diisocyanat, Fluoren-2,7-diisocyanat, Anthrachinon-2,6-diisocyanat, Pyren-3,8-diisocyanat, Chrysen-2,8-diisocyanat, 1-Methylbenzol-2,4,6-triisocyanat, Naphthalin-1,3,7-triisocyanat, Biphenylmethan-2,4,4'-triisocyanat, Triphenylmethan-4,4',4''-triisocyanat, Cyclohexan-1,2-diisocyanat, 1-Isopropylbenzol-2,4-diisocyanat, 1-Chlorbenzol-2,4-diisocyanat, 1-Fluorbenzol-2,4-diisocyanat, 1-Nitrobenzol-2,4-diisocyanat, 1-Chlor-4-methoxybenzol-2,5-diisocyanat, Azobenzol-4,4'-diisocyanat, Benzolazonaphthalin-4,4'-diisocyanat, Diphenyläther-2,4-diisocyanat und Diphenyläther-4,4'-diisocyanat.

An Stelle der Polyisocyanate können auch Polyisocyanate abspaltende Verbindungen Verwendung finden, ferner Isocyanatgruppen enthaltende Umsetzungsprodukte mehrwertiger Alkohole mit Polyisocyanaten, beispielsweise das Umsetzungsprodukt von 1 Mol Trimethylolpropan mit 3 Mol Toluylen-diisocyanat, ferner trimerisierte oder polymerisierte Isocyanate, wie sie etwa in der deutschen Patentschrift 951 168 beschrieben sind. Außerdem kommt auch ein Umsetzungsprodukt aus 1 Mol Wasser und 3 Mol Hexamethylendiisocyanat mit einem NCO-Gehalt von 16—17 Gew.-% in Frage. Besonders bevorzugt ist das zuletzt genannte Umsetzungsprodukt aus Wasser und Hexamethylendiisocyanat. Der NCO-Gehalt des Umsetzungsproduktes gilt für eine 75 gew.-%ige Lösung in Xylol/Äthylglykolacetat.

Das Mischpolymere und das Aminoplast werden im Verhältnis von 50—95, vorzugsweise 55—80 Teilen des Mischpolymeren und von 5—50, vorzugsweise 20—45 Teilen des Aminoplastes im organischen Lösungsmittel gelöst. Die Mengenverhältnisse des Mischpolymeren und des alkylierten Aminoplastes sind so zu wählen, daß sich die beiden Komponenten sowohl in der Überzugslösung als auch im fertigen Film vertragen. Es kann jede geeignete Konzentration des Mischpolymeren und des Aminoplastes im Lösungsmittel von z.B. 1 bis 50 Gew.-% zur Anwendung kommen. Ist ein Pigment anwesend, so liegt der Gesamtgehalt der Feststoffe in der Überzugsmasse zwischen 5 und 75 Gew.-%. Das Verhältnis von Pigment zu Bindemittel (Mischpolymere plus Aminoplast) kann zwischen 1:20 und 20:1 liegen.

Als Lösungsmittel für diese Überzugsmassen bzw. Bindemittel können die jenigen für sich oder im Gemisch verwendet werden, die oben schon für die Copolymerisation genannt sind (außer den Acetessigsäureestern), ferner Ester, wie Äthyl-, Butyl-, Amyl-, Äthoxyäthyl- oder Methoxyäthyllactate oder -propionate; Ketone, wie Isophoron; Dioxan; Alkohole, wie Amylalkohole und Cyclohexanol; Äther, wie Diäthyläther und verschiedene andere Lösungsmittel, wie Dimethylformamid, Dimethylacetamid, Acetonitril, Nitromethan, Nitroäthan, Nitropropan oder Nitrobutan, sowie Gemische von zwei oder mehreren Lösungsmitteln der gleichen Gruppe sowie von mehreren oder von allen der vorstehend aufgeführten Gruppen.

Als Pigmente können zugesetzt werden: anorganische Pigmente, wie Chromgelb, Preußischblau, Braunschweiger Grün; Titanpigmente, z.B. Titandioxyd, gestreckte Titanpigmente (die entweder mit gefällten oder natürlichen Streckmitteln gestreckt sind, wie Erdalkalisulfaten, z.B. Calciumsulfat und Bariumsulfat); getönte Titanpigmente, Titanate, wie Barium, Zink-, Blei- und Magnesiumtitanate. Auch andere Arten anorganischer Pigmente können verwendet werden. z.B. Zinksulfidpigmente, wie Zinksulfid, Lithopon, auf Calciumgrundlage, mit natürlichen Streckmitteln gestrecktes Zinksulfid, Zinkoxyd oder Antimonoxyd oder organische Pigmente, d.h. organische Farbstoffe, die frei von Sulfonsäure-, Carbonsäure- oder anderen wasserlöslichmachenden Gruppen sind. Unter den Begriff "Pigment" fallen auch andere wasserunlösliche organische Farbstoffe, z.B. die Calcium- oder Bariumlacke von Azolackfarbstoffen.

Die neuen Überzugsmassen können auf beliebige Weise auf die Substrate aufgebracht werden z.B. durch Streichen, Aufsprühen, Eintauchen, Walzen. Sie werden dann getrocknet und durch Erhitzen gehärtet. Im allgemeinen ist es nicht erforderlich, Härtungskatalysatoren zuzugeben. Gegebenenfalls kann jedoch ein Säurekatalysator zugesetzt werden. die Menge eines solchen Katalysators kann zwischen 0,1 und 1 Gew.-% liegen, bezogen auf das Gewicht des Aminoplastes. Die Verwendung eines Härtungskatalysators ist dann zweckmäßig, wenn niedrige Härtungstemperaturen notwendig sind. Bei Verwendung von Härtungskatalysatoren kann das Unlöslichmachen einfach durch Trocknen und Altern bei Raumtemperatur erreicht werden. Härtungskatalysatoren, die zum Härten der erfindungsgemäßen Zusammensetzungen verwendet werden können, sind alle Säurekatalysatoren, einschließlich aller organischen und anorganischen Säurekatalysatoren. Zum Beispiel kann man eine katalytische Menge von Schwefel- oder Salzsäure oder von deren Salzen zugeben, z.B. Ammoniumsulfat oder Ammoniumchlorid oder eine organische Säure, wie Essigsäure, Phthalsäure, Benzoesäure, Toluolsulfonsäure, Naphthalinsulfonsäure oder das Monosalz der Maleinsäure mit Triäthylamin.

Das Trocknen der Überzüge kann bei erhöhten Temperaturen, z.B. 60 bis 104°C erfolgen. Das Härten kann bei 82 bis 232°C vorgenommen werden, gleichgültig, ob ein Katalysator verwendet wurde oder nicht. Die Härtezeit kann im oberen Temperaturbereich von etwa 232°C zwischen 1/2 und 2 Minuten und im unteren Temperaturbereich von etwa 82°C zwischen 1 und 2 Stunden liegen. Besonders zweckmäßig wird das Härten 15 bis 30 Minuten bei 149°C vorgenommen.

Die Umsetzung der hydroxylgruppenhaltigen Copolymerisate mit den organischen Polyisocyanaten kann dabei je nach dem Verwendungszweck der Umsetzungsprodukte mit 0,5 bis 1,1 NCO-Gruppe pro Hydroxylgruppe durchgeführt werden. Die Umsetzung wird bevorzugt so durchgeführt, daß die Mengen des organischen Polyisocyanats, bezogen auf den Gesamthydroxylgehalt der im Reaktionsgemisch vorliegenden Komponenten pro Hydroxylgruppe, in einer Menge von 0,7 bis 1,0 Isocyanatgruppen vorhanden sind.

Die flüssigen, organische Lösungsmittel ohne aktive Wasserstoffatome enthaltende Überzugsmassen bzw.: Bindemittel für lufttrocknende und einbrennbare Lacke enthalten als wesentliche Bestandteile im allgemeinen 60 bis 94 Gew.-% der Copolymerisate, die nach dem Verfahren gemäß

Patentanspruch 1 hergestellt worden sind und 6 bis 40 Gew.-% der organischen Polyisocyanate. Beide Komponenten müssen sich zu 100 Gew.-% ergänzen.

Die Reaktionslacke enthalten bei ihrer Verwendung keine Vernetzungskatalysatoren. Sie sind dadurch bei Zimmertemperatur etwa 2 Tage lagerstabil; d.h. der Viskositätsanstieg und die darin sich abspielenden Umsetzungen, die durch die in dem Beschluß des 32. Senats des Bundespatentgerichts der Bundesrepublik Deutschland vom 9. Februar 1971 (BPatGer E 12, Seite 114) angegebene Gleichung wiedergegeben sind, verlaufen in den Reaktionslacken der Erfindung nicht unter starker Reaktion und auch nicht unter beschleunigenderwärmeentwicklung der Reaktion, so daß während dieser Zeit durch chemisch-physikalische Untersuchungen die Ausgangskomponenten in dem Lack durchaus bestimmungsfähig sind. Bei Lagerung bei 0 bis −5°C verbleiben die Reaktionslacke der Erfindung für 8 bis 10 Tage im gebrauchsfähigen Zustand. Auch für einen derartig bei tieferer Temperatur gelagerten Reaktionslack der Erfindung gelten die vorstehenden Ausführungen bezüglich der Bestimmungsmöglichkeit der darin enthaltenen Komponenten, die freie OH- bzw. NCO-Gruppen enthalten.

Man bringt die Mischungen aus lösungsmittelhaltigen hydroxylgruppenhaltigen Copolymerisaten und Polyisocyanat auf denkbar einfachstem Wege, etwa nach Zusatz bekannter Hilfsmittel, wie Verlaufmittel, Pigmente oder Farbstoffe, durch Spritzen, Tauchen, Gießen, Bürsten oder sonstige geeignete Maßnahmen auf die entsprechenden Unterlagen auf und trocknet die Überzüge bei Zimmertemperatur; in speziellen Fällen, etwa bei Verwendung von Isocyanatabspaltern, kann ein Einbrennen der Überzüge erfolgen, was sich im wesentlichen nach den verwendeten Unterlagen und den von der Praxis gestellten Anforderungen an die Überzüge richtet. Auch die Mitverwendung von reaktiven Melaminharzen kann von Vorteil sein. Man kann die reaktiven Melaminharze etwa in Mengen bis zu 100 Gew.-% zusetzen, wodurch insbesondere eine Glanzerhöhung im Überzug beobachtet werden kann.

Die Umsetzung und das Aufbringen der Überzüge auf die Unterlage erfolgt in Lösung. Geeignete Lösungsmittel sind z.B. essigsaure Äthylester, Butylester, Ätherester, Diäthylenglykoldiacetat sowie aromatische Verbindungen, wie Benzol, Toluol oder Xylol. Die Konzentration der Lösungen kann in weiten Grenzen schwanken und richtet sich im wesentlichen nach der Löslichkeit der Komponenten. Bevorzugt verwendet man Lösungen mit einem Feststoffgehalt von 20—80 Gew.-%. Für spezielle Anwendungszwecke sind allerdings auch Polymerisatlösungen mit einem niedrigeren Hydroxylgruppengehalt, der zu einer schwächeren Vernetzung führt, von Interesse, beispielsweise für Beschichtungen auf beweglichen Unterlagen. Derartige Copolymerisate sind mit den in der Praxis typischen hydroxylgruppenhaltigen Polyestern und Polyäthern in jedem Verhältnis mischbar und können daher mit diesen verschnitten werden.

Auch die Umsetzungsprodukte derartiger Verschnitte mit Polyisocyanaten liefern alkaliresistente Überzüge mit ähnlichen Eigenschaften wie die oben beschriebenen, wobei insbesondere die relativ schnelle Trocknungszeit auffällt.

Das Verfahren kann zur Herstellung von Überzügen oder Beschichtungen auf Unterlagen verschiedenster Art, z.B. porösen oder nicht porösen Unterlagen, wie textilen Vliesen, Leder oder Kunststoffen, eingesetzt werden. Besonders hervorgehoben sei die Herstellung von Überzügen auf Holz oder Metallen. Man erhält in jeder Fall hochglänzende, sehr oberflächenharte porenfreie elastische und lösungsmittelbeständige Überzüge, die man sowohl mit starken anorganischen Säuren als auch mit starken Laugen behandeln kann, ohne daß die Überzüge nur in geringstem Maße angegriffen werden. Derartige Überzüge zeigen außerdem eine hervorragende Wetterbeständigkeit und Vergilbungsresistenz.

Besonders ist hervorzuheben, daß die hergestellten Überzüge oder Beschichtungen auf Aluminiumblechen als Einschichtlackierungen eine ausgezeichnete Haftfestigkeit aufweisen. Die Überzüge und Beschichtungen können vorteilhaft auf Aluminium vorgenommen werden, indem man nach dem Auftragen der Beschichtungen den Überzug durch eine Temperaturbehandlung bei 40—50°C während etwa 30 Minuten vom Lösungsmittel befreit, worauf die Beschichtung bzw. der Überzug in einem klebfreien Zustand vorliegt, so daß die Oberfläche keinen Staub aufnimmt und auch nicht mehr gegen Stoß oder anderen mechanischen Druck empfindlich ist, so daß die so lackierten Gegenstände einer Weiterbearbeitung unterzogen werden können. Nach einer Härtung von 3 bis 4 Tagen bei Raumtemperatur werden dann die maximalen Eigenschaften erreicht. Durch Temperaturerhöhung auf 120°C werden in 30 Minuten ebenfalls die maximalen Eigenschaften erreicht.

### Beispiel 1

In einem mit Rührer, Rückflußkühler und Thermometer ausgestatteten Kolben wird ein Gemisch, bestehend aus 68 g Xylol und 100 g Glycidylester von $\alpha,\alpha$-Dialkylalkanmonocarbonsäuren der Summenformel $C_{12-14}H_{22-26}O_3$ mit einem Epoxyäquivalent von 240 bis 250, im folgenden nur noch mit Glycidylester von $\alpha,\alpha$-Dialkylalkanmonocarbonsäuren bezeichnet, auf 154°C erhitzt. Dem werden bei 154°C im Verlauf von 3 Stunden gleichmäßig folgende Gemische, nämlich

1) 20 g Acrylsäure,
71 g Hydroxyäthylmethacrylat,
100 g 2-Äthylhexylacrylat,
159 g Methylmethacrylat,
57 g Ricinenfettsäure mit einer Jodzahl 142 und

2) 60 g Xylol,
6 g tert.-Butylperoxyd,
12 g tert.-Butylperoctoat

zugetropft. Anschließend wird noch eine Stunde unter Rückfluß gehalten und dabei werden zusätzlich 2 g tert.-Butylperoctoat zugetropft. Anschließend wird noch 2 Stunden unter Rückfluß bei 145°C nachpolymerisiert. Das erhaltene Copolymerisat zeigt eine Viskosität nach Gardner-Holdt von Q—R (60%ig in Xylol), eine Jodzahl von 18 und eine Hydroxylzahl von 116 sowie eine Säurezahl 8.

## Beispiel 2

94 g der vorstehend nach Beispiel 1 erhaltenen Copolymerisatlösung werden mit 50 g hochreaktivem veräthertem Aminoaldehydharz (in 50%iger Lösung in Alkoholen) — welches in der Firmendruckschrift Reichhold Albert Chemie AG mit der Bezeichnung ®Resamin MF 577 beschrieben ist —, 20 g Xylol und 0,2 g Kobaltsikkativ (60%ig an Co) vermischt. Die Zusammensetzung wurde auf phosphatierte Stahlplatten gesprüht und ergab nach 15-minütigem Trocknen an der Luft und 30-minütigem Härten bei 110°C einen Film mit einer Dicke von 0,037 mm. Die erhaltenen Überzüge besitzen eine ausgezeichnete Oberflächenhärte, Elastizität und Brillanz.

## Beispiel 3

Reaktionslack auf der Basis von 80,3 Gew.-% Mischpolymerisat und 19,7 Gew.-% organischem Triisocyanat, beide bezogen auf das Festkörpergewicht.

I. 534 g Mischpolymerisat 1-Xylol-Lösung (gelöster Festkörper 60 Gew.-%) werden mit 600 g Titandioxyd (Rutil), 200 g Xylol und 100 g Äthylglykolacetat zu einem Lack angerieben.

II. 150 g des pigmentierten vorstehenden Lackansatzes I, der das Mischpolymerisat 1 enthält, 61,5 g der unpigmentierten Mischpolymerisat 1-Xylol-Lösung (gelöster Festkörper 60 Gew.-%) und 23,1 g einer 75 gew.-%igen Lösung eines Triisocyanates mit einem NCO-Gehalt von 16,5—17,0 Gew.-%, welches durch Umsetzung aus 3 Molen Hexamethylendiisocyanat und 1 Mol Wasser erhalten worden ist, in einem Gemisch aus Xylol/Äthylglykolacetat 1:1 gelöst, werden mit Xylol auf eine Spritzviskosität verdünnt, mit 0.1 g Kobaltsikkativ (6,0%ig an Co) versetzt und auf Aluminiumbleche mit einer Trockenschichtdicke von 45—50 µm aufgetragen und an der Luft getrocknet. Klebfreiheit wird nach 20 bis 30 Minuten erreicht. Die erhaltenen Überzüge zeigen schon nach 24 Stunden Lufttrocknung bei Raumtemperatur eine ausgezeichnete Oberflächenhärte (als Kratzfestigkeit geprüft), höhere Elastizität, Fülle und Glanz.

## Beispiel 4

Es wurde wie in Beispiel 1 angegeben gearbeitet, jedoch wurden folgende Komponenten verwendet:

110 g Glycidylester von $\alpha,\alpha$-Dialkylalkanmonocarbonsäuren,
22 g Acrylsäure,
112 g Hydroxyäthylmethacrylat,
66 g n-Butylacrylat,
152 g Methylmethacrylat,
45 g Ricinenfettsäure mit Jodzahl 142

Das erhaltene Copolymerisat zeigte eine Hydroxylzahl von 154.

## Beispiel 5

94 g der vorstehend nach Beispiel 1 erhaltenen Copolymerisatlösung werden mit 50 g mittelreaktivem verätherten Aminoaldehydharz (in 50%iger Lösung in Alkoholen) — welches in der Firmendruckschrift Reichhold Albert Chemie AG mit der Bezeichnung ®Resamin MF 590 beschrieben ist —, 20 g Xylol und 0,2 g Kobaltsikkativ (60%ig an Co) vermischt. Die Zusammensetzung wurde auf phosphatierte Stahlplatten gesprüht und ergab nach 15-minütigem Trocknen an der Luft und 30-minütigem Härten bei 130°C einen Film mit einer Dicke von 0,037 mm. Die erhaltenen Überzüge besitzen eine ausgezeichnete Oberflächenhärte, Elastizität und Brillanz.

## Beispiel 6

Reaktionslack auf der Basis von 70 Gew.-% Mischpolymerisat und 30 Gew.-% organischem Triisocyanat, beide bezogen auf das Festkörpergewicht.

I. 534 g Mischpolymerisat 1-Xylol-Lösung (gelöster Festkörper 60 Gew.-%) werden mit 600 g Titandioxyd (Rutil), 200 g Xylol und 100 g Äthylglykolacetat zu einem Lack angerieben.

II. 150 g des pigmentierten vorstehenden Lackansatzes I, der das Mischpolymerisat 1 enthält, 53 g der unpigmentierten Mischpolymerisat 1-Xylol-Lösung (gelöster Festkörper 60 Gew.-%) und 34 g einer 75 Gew.-% Lösung eines Triisocyanates mit einem NCO-Gehalt von 16,5—17,0 Gew.-%, welches durch Umsetzung aus 3 Molen Hexamethylendiisocyanat und 1 Mol Wasser erhalten worden ist, in einem Gemisch aus Xylol/Äthylglykolacetat 1:1 gelöst, werden mit Xylol auf eine Spritzviskosität verdünnt, mit 0,1 g Kobaltsikkativ (6,0%ig an Co) versetzt und auf Aluminiumbleche mit einer Trockenschichtdicke von 45 bis 50 $\mu$m aufgetragen und an der Luft getrocknet. Klebfreiheit wird nach 20 bis 30 Minuten erreicht. Die erhaltenen Überzüge zeigen schon nach 24 Stunden Lufttrocknung bei Raumtemperatur eine ausgezeichnete Oberflächenhärte (als Kratzfestigkeit geprüft), höhere Elastizität, Fülle, Glanz und Lösungsmittelbeständigkeit.

## Patentansprüche

1. Verfahren zur Herstellung von in organischen Lösungsmitteln löslichen hydroxylgruppenhaltigen Copolymerisaten durch Copolymerisation in organischen Lösungsmitteln von Acrylsäure und/oder Methacrylsäure, Alkylacrylaten gegebenenfalls weiteren äthylenisch ungesättigten anpolymerisierbaren Monomeren unter gleichzeitiger Veresterung mit Glycidylestern von $\alpha$-Alkylalkanmonocarbonsäuren und/oder von $\alpha,\alpha$-Dialkylalkanmonocarbonsäuren mit der Summenformel $C_{12-14}H_{22-26}O_3$ durch Erhitzen in Anwesenheit eines Polymerisationsinitiators, dadurch gekennzeichnet, daß ein Gemisch A, bestehend aus einem inerten organischen Lösungsmittel und
a) 10—45 Gew.-% der Glycidylester auf 90 bis 200°C erhitzt wird und mit einem Gemisch B, bestehend aus
b) 2—15 Gew.-% der Acrylsäure und/oder Methacrylsäure,
c) 5—25 Gew.-% Hydroxyalkylacrylaten und/oder Hydroxyalkylmethacrylaten, vorzugsweise solchen mit 2 bis 4 Kohlenstoffatomen in der Alkylgruppe,
d) 20—78 Gew.-% der Alkylacrylate und/oder Alkylmethacrylate, vorzugsweise solchen mit 1 bis 8 Kohlenstoffatomen in der Alkylgruppe,
e) 5—30 Gew.-% ungesättigten Fettsäuren mit 11 bis 22 C-Atomen mit Jodzahlen von 90 bis 240, gegebenenfalls
f) weiteren äthylenisch ungesättigten anpolymerisierbaren Monomeren, und
g) 0—20 Gew.-%, vorzugsweise 0—10 Gew.-% gesättigten Fettsäuren
umgesetzt wird, wobei die Komponenten a, b, c, d, e und gegebenefalls f und g in solchen Mengen eingesetzt werden, daß ihre Summe 100 Gew.-% ergibt.

2. Verfahren nach Anspruch 1, dadurch gekennzeichnet, daß das Gemisch A, bestehend aus aromatischen Lösungsmitteln allein oder einem bis zu 50 Gew.-% aliphatische Verbindungen enthaltenden aromatischen Lösungsmittel mit den Siedegrenzen von jeweils 140—220°C und der Komponente a), auf 140 bis 180°C erhitzt wird, der Anteil der Komponente e) 5—15 Gew.-% beträgt und die Komponenten f) und g) entfallen.

3. Verfahren nach Anspruch 2, dadurch gekennzeichnet, daß das Gemisch A
a) 20—35 Gew.-% der Glycidylester enthält und das Gemisch B
b) 3—11 Gew.-% Acrylsäure,
c) 5—25 Gew.-% Hydroxyäthylmethacrylat,
d) 10—20 Gew.-% n-Butylacrylat und
10—37 Gew.-% Methylmethacrylat und
e) 5—10 Gew.-% Ricinenfettsäuren mit Jodzahlen von 128—150
enthält.

4. Verfahren nach einem der Ansprüche 1 bis 3, dadurch gekennzeichnet, daß ein Copolymerisat mit einem Hydroxylgruppengehalt von 0,5 bis 6,0, bevorzugt 1,5 bis 2,8 Gew.-% und mit Säurezahlen von 2 bis 12 hergestellt wird.

5. Verfahren nach einem oder mehreren der Ansprüche 1 bis 4, dadurch gekennzeichnet, daß als Komponente a ein solcher Glycidylester eingesetzt wird, dessen Säurekomponente durch Umsetzung von Tripropylen, Kohlenoxyd und Wasser erhalten worden ist und fast nur aus Monocarbonsäuren mit stark verzweigten $C_{10}$-Ketten besteht.

6. Flüssige, organische Lösungsmittel enthaltende überzugsmasse bzw. Bindemittel für Einbrennlacke, die
I) Copolymerisate aus $I_1$) Alkylacrylaten und/oder Alkylmethacrylaten, $I_2$) Hydroxyalkylacrylaten und/oder Hydroxyalkylmethacrylaten, und $I_3$) Acrylsäure und/oder Methacrylsäure sowie $I_4$) esterartig daran gebundenen Glycidylestern von $\alpha$-Alkylalkanmonocarbonsäuren und/oder $\alpha$-Dialkylalkanmonocarbonsäuren mit der Summenformel $C_{12-14}H_{22-26}O_3$ und
II) Aminoaldehydharz und gegebenenfalls Pigmente und/oder andere übliche Zusatzstoffe enthält, dadurch gekennzeichnet, daß als Komponente
I) 50—95, vorzugsweise 55—80 Gew.-% Copolymerisate, die nach dem Verfahren gemäß Patentanspruch 1 hergestellt worden sind, und als Komponente
II) 5—50, vorzugsweise 20—45 Gew.-% eines verätherten Aminoaldehydharzes, das vorzugsweise wenigstens 80% Methylolgruppen enthält, die mit Cyclohexanol oder einem 1 bis 6 C-Atome enthaltenden Alkanol alkyliert sind,
zugegen sind, wobei die Komponenten I und II sich zu 100 Gew.-% ergänzen müssen.

7. Flüssige, organische Lösungsmittel enthaltende Überzugsmasse bzw. Bindemittel für Einbrennlacke nach Anspruch 6, dadurch gekennzeichnet, daß als Komponente I das nach dem Verfahren gemäß Patentanspruch 2 oder 3 hergestelle Copolymerisat enthalten ist.

8. Flüssige, organische Lösungsmittel enthaltende Uberzugsmasse bzw. Bindemittel für

Einbrennlacke einem der Ansprüche 6 oder 7, dadurch gekennzeichnet, daß als Komponente II verätherte Aminoaldehydharze enthalten sind, welche als Kondensationsprodukte aus einem Mol Melamin und vier Molen Formaldehyd erhalten und in denen etwa zwei Methylolgruppen unveräthert und zwei weitere Methylolgruppen mit Methanol veräthert sind und als 70 gew.-%ig in Isobutanol gelöste Kondensationsprodukte eine Viskosität von 300 bis 600 Sekunden, gemessen im DIN-Becher mit einer 4 mm Auslauföffnung bei 20°C aufweisen.

9. Flüssige, organische Lösungsmittel ohne aktive Wasserstoffatome enthaltende Überzugsmasse bzw. Bindemittel für lufttrocknende und einbrennbare Lacke, die

I) Copolymerisate aus $I_1$) Alkylacrylaten und/oder Alkylmethacrylaten, $I_2$) Hydroxyalkylacrylaten und/oder Hydroxyalkylmethacrylaten und $I_3$) Acrylsäure und/oder Methacrylsäure sowie $I_4$) esterartig daran gebundenen Glycidylestern von $\alpha$-Alkylalkanmonocarbonsäuren und/oder $\alpha,\alpha$-Dialkylalkanmonocarbonsäuren mit der Summenformel $C_{12-14}H_{22-26}O_3$ und

II) Polyisocyanate

und gegebenenfalls Pigmente und/oder andere übliche Zusatzstoffe enthält, dadurch gekennzeichnet, daß als Komponente

I) 60—94 Gew.-% Copolymerisate, die nach dem Verfahren gemäß Patentanspruch 1 hergestellt worden sind und als Komponente

II) 6—40 Gew.-% organische Polyisocyanate zugegen sind,

wobei die Komponenten I und II sich zu 100 Gew.-% ergänzen müssen.

10. Überzugsmasse bzw. Bindemittel nach Anspruch 9, dadurch gekennzeichnet, daß 0,5 bis 1,1 NCO-Gruppen pro Hydroxylgruppe vorliegen, wobei der bevorzugte Bereich zwischen 0,7 und 1,0 NCO-Gruppen pro Hydroxylgruppe liegt.

## Claims

1. A process for the manufacture of copolymers which contain hydroxyl groups and are soluble in organic solvents by copolymerisation in organic solvents of acrylic and/or methacrylic acid, alkyl acrylates and optionally additional ethylenically unsaturated copolymerisable monomers while simultaneously esterifying with glycidyl esters of $\alpha$-alkylalkane-monocarboxylic acids and/or $\alpha,\alpha$-dialkylalkanemonocarboxylic acids of the general formula $C_{12-14}H_{22-26}O_3$ by heating in the presence of a polymerisation initiator, characterized in that a mixture A), consisting of an inert organic solvent and

a) 10 to 45% by weight of the glycidyl esters is heated to a temperature in the range from 90 to 200°C, and reacted with a mixture B), consisting of

b) 2 to 15% by weight of acrylic and/or methacrylic acid,

c) 5 to 25% by weight of the hydroxyalkyl acrylates and/or hydroxyalkyl methacrylates, preferably containing 2 to 4 carbon atoms in the alkyl group

d) 20 to 78% by weight of the alkyl acrylates and/or alkyl methacrylates, preferably containing 1 to 8 carbon atoms in the alkyl group,

e) 5 to 30% by weight of unsaturated fatty acids with 11 to 22 carbon atoms and an iodine number of 90 to 240, optionally

f) additional ethylenically unsaturated copolymerisable monomers, and

g) 0 to 20% by weight, preferably 0 to 10% by weight of saturated fatty acids,

the components a), b), c), d), e) and optionally f) and g) being employed in such quantities that their sum add up to 100% by weight.

2. A process according to claim 1, characterized in that mixture A), consisting of aromatic solvents either alone or of aromatic solvents containing up to 50% by weight of aliphatic compounds, each having a boiling range from 140 to 220°C, and component a) is heated to 140 to 180°C; the amount of component e) is from 5 to 15% by weight and components f) and g) are not applied.

3. A process according to claim 2, characterized in that mixture A) contains

a) from 20 to 35% by weight of glycidyl ester and mixture B) contains

b) from 3 to 11% by weight of acrylic acid,

c) from 5 to 25% by weight of hydroxyethyl methacrylate,

d) from 10 to 20% by weight of n-butyl acrylate and from 10 to 37% by weight of methyl methacrylate and

e) from 5 to 10% by weight of dehydrated castor oil fatty acids with iodine numbers of from 128 to 150.

4. A process according to one of the claims 1 to 3, characterized in that a copolymer is produced having a content of from 0.5 to 6.0, preferably 1.5 to 2.8% by weight of hydroxyl groups and acid numbers of from 2 to 12.

5. A process according to one or more of the claims 1 to 4, characterized in that a glycidyl ester is applied as component a) the acid component of which has been obtained by reaction of tripropylene, carbon monooxide and water and consists almost completely of monocarboxylic acids with highly branched chains of 10 carbon atoms.

6. Liquid coating compositions or binder for stoving lacquers, containing organic solvents and comprising

I) copolymers of $I_1$) alkyl acrylates and/or alkyl methacrylates, $I_2$) hydroxyalkyl acrylates and/or hydroxyalkyl methacrylates and $I_3$) acrylic and/or methacrylic acid as well as $I_4$) glycidyl esters of $\alpha$-alkylalkanemonocarboxylic acids and/or $\alpha,\alpha$-dialkylalkanemonocarboxylic acids having the general formula $C_{12-14}H_{22-26}O_3$ and being bound to the copolymers by ester bonds

II) amino aldehyde resin and optionally pigments and/or other conventional additives characterized in that there are present as component

I) from 50 to 95%, preferably from 55 to 80% by weight of copolymers, prepared according to the process of claim 1, and as component

II) from 5 to 50, preferably from 20 to 45% by weight of an etherified amino aldehyde resin, which preferably contains at least 80% methylol groups, being alkylated with cyclohexanol or an alkanol, containing 1 to 6 carbon atoms, components

A and B adding up to 100% by weight.

7. Liquid coating compositions or binders for stoving lacquers, containing organic solvents, according to claim 6, characterized in that component I is the copolymer prepared according to the process of claim 2 or 3.

8. Liquid coating compositions or binders for stoving lacquers, containing organic solvents according to one of claims 6 or 7, characterized in that component II contains etherified amino aldehyde resins which have been obtained by a condensation reaction of one Mol of melamine and 4 moles of formaldehyde, approximately 2 methylol groups of said resins being unetherified and 2 further methylol groups are etherified by methanol; said resins when dissolved as a 70% by weight solution in iso-butanol, have a viscosity of from 300 to 600 sec., measured at 20°C in a DIN-cup with an orifice of 4 mm.

9. Liquid coating composition or binder for airdrying and stoving lacquers, containing organic solvents without active hydrogen atoms, comprising

I) copolymers of $I_1$) alkyl acrylates and/or alkyl methacrylates, $I_2$) hydroxyalkyl acrylates and/or hydroxyalkyl methacrylates and $I_3$) acrylic and/or methacrylic acid as well as $I_4$) glycidyl esters of $\alpha$-alkylalkanemonocarboxylic acids and/or $\alpha,\alpha$-dialkylalkanemonocarboxylic acids having the general formula $C_{12-14}H_{22-26}O_3$ and being bound to the copolymers by ester bonds and

II) polyisocyanates and optionally pigments and/or other conventional additives characterized in that as component

I) 60 to 94% by weight of copolymers, prepared according to the process of claim 1 and as component

II) 6 to 40% by weight of organic polyisocyanates are present, components I and II adding up to 100% by weight.

10. Coating composition or binder according to claim 9 characterized in that from 0.5 to 1.1 NCO-groups per hydroxy groups are present, the preferred range being 0.7 to 1.0 NCO groups per hydroxy group.

**Revendications**

1. Procédé pour préparer des copolymères porteurs de groupes hydroxy et solubles dans des solvants organiques, par copolymérisation dans des solvants organiques: d'acide acrylique et/ou d'acide méthacrylique, d'acrylates d'alkyles, éventuellement d'autres monomères éthyléniques polymérisables, avec estérification simultanée avec des esters glycidyliques d'acides $\alpha$-alkyl-alcane-monocarboxyliques et/ou d'acides $\alpha,\alpha$-dialkyl-alcane-monocarboxyliques de formule brute $C_{12-14}H_{22-26}O_3$, par chauffage en présence d'un initiateur de polymérisation, procédé caractérisé en ce qu'on chauffe à une température de 90 à 200°C un mélange A constitué d'un solvant organique inerte et

a) de 10 à 45% en poids des esters glycidyliques, et on fait réagir avec un mélange B constitué:

b) de 2 à 15% en poids de l'acide acrylique et/ou de l'acide méthacrylique,

c) de 5 à 25% en poids d'acrylates d'hydroxy-alkyles et/ou de méthacrylates d'hydroxy-alkyles, de préférence de ceux qui contiennent de 2 à 4 atomes de carbone dans le radical alkyle,

d) de 20 à 78% en poids des acrylates d'alkyles et/ou des méthacrylates d'alkyles, de préférence de ceux qui contiennent de 1 à 8 atomes de carbone dans le radical alkyle,

e) de 5 à 30% en poids d'acides gras insaturés en $C_{11}$—$C_{22}$ ayant des indices d'iode de 90 à 240, éventuellement

f) d'autres monomères éthyléniques polymérisables et

g) de 0 à 20% en poids, de préférence de 0 à 10% en poids, d'acides gras saturés,

les composantes a), b), c), d), e) et éventuellement f) et g) étant utilisées en des quantités telles que la somme de leurs proportions soit égale à 100% en poids.

2. Procédé selon la revendication 1, caractérisé en ce qu'on chauffe à 140—180°C le mélange A constitué de la composante a) et de solvants aromatiques seulement ou d'un solvant aromatique renfermant jusqu'à 50% en poids de composés aliphatiques, ces solvants aromatiques ayant chacun une zone d'ébullition comprise dans l'intervalle allant de 140 à 220°C, la proportion de la composante e) étant comprise entre 5 et 15% en poids et les composantes f) et g) faisant défaut.

3. Procédé selon la revendication 2, caractérisé en ce que le mélange A contient:
a) de 20 à 35% en poids des esters glycidyliques, et le mélange B contient:
b) de 3 à 11% en poids d'acide acrylique,
c) de 5 à 25% en poids de méthacrylate d'hydroxyéthyle,
d) de 10 à 20% en poids d'acrylate de n-butyle et de 10 à 37% en poids de méthacrylate de méthyle, et
e) de 5 à 10% en poids d'acides ricinéniques ayant des indices d'iode de 128 à 150.

4. Procédé selon l'une quelconque des revendications 1 à 3, caractérisé en ce qu'on prépare un copolymère ayant une teneur en groupes hydroxy de 0,5 à 6,0, de préférence de 1,5 à 2,8% en poids, et des indices d'acide de 2 à 12.

5. Procédé selon l'une ou plusieurs des revendications 1 à 4, caractérisé en ce qu'on utilise, comme composante a), un ester glycidylique dont la composante acide a été obtenue par réaction du tripropylène, de l'oxyde de carbone et de l'eau et n'est presque constituée que d'acides monocarboxyliques à chaînes en $C_{10}$ très ramifiées.

6. Matière de revêtement ou liant liquide renfermant des solvants organiques, pour des peintures et vernis à cuire, qui contient:
I) des copolymères obtenus à partir $I_1$) d'acrylates d'alkyles et/ou de méthacrylates d'alkyles, $I_2$) d'acrylates d'hydroxyalkyles et/ou de méthacrylates d'hydroxyalkyles, et $I_3$) d'acide acrylique et/ou d'acide méthacrylique, ainsi que $I_4$) d'esters glycidyliques d'acides $\alpha$-alkylalcane-monocarboxyliques ou d'acides $\alpha,\alpha$-dialkyl-alcane-monocarboxyliques de formule brute $C_{12-14}H_{22-26}O_3$, esters glycidyliques qui sont reliés par des fonctions esters, et
II) une résine amine-aldéhyde, et éventuellement des pigments et/ou d'autres additifs usuels, matière de revêtement ou liant caractérisé en ce qu'il contient:
comme composant I) de 50 à 95% en poids, de préférence de 55 à 80, de copolymères qui ont été préparés par le procédé de la revendication 1, et
comme composante II): de 5 à 50% en poids, de préférence de 20 à 45, d'une résine amine-aldéhyde éthérifiée renfermant de préférence au moins 80% de groupes méthylols alkylés par du cyclohexanol ou un alcanol contenant de 1 à 6 atomes de carbone,
les quantitiés des composantes I) et II) devant se compléter pour donner 100% en poids.

7. Matière de revêtement ou liant liquide contenant des solvants organiques pour vernis et peintures, selon la revendication 6, caractérisé en ce qu'il contient, comme composante I), le copolymère que a été préparé par le procédé de la revendication 2 ou de la revendication 3.

8. Matière de revêtement ou liant liquide contenant des solvants organiques, pour vernis et peintures, selon l'une des revendications 6 et 7, caractérisé en ce qu'il contient, comme composante II), des résines amine-aldéhyde éthérifiées qui ont été obtenues comme produits de condensation à partir de 1 mole de mélamine et de 4 moles de formaldéhyde et dans lesquelles à peu près 2 groupes méthylols ne sont pas éthérifiés et 2 autres groupes méthylols sont éthérifiés par du méthanol, ces produits de condensation présentant, en solution à 70% en poids dans de l'isobutanol, à 20°C, une viscosité de 300 à 600 secondes, mesurée dans le récipient DIN ayant une ouverture de sortie de 4 mm.

9. Matière de revêtement et liant liquide contenant des solvants organiques sans atomes d'hydrogène actifs, pour des vernis et peintures séchant à l'air et pouvant être cuits, qui contient:
I) des copolymères dérivant $I_1$) d'acrylates d'alkyles et/ou de méthacrylates d'alkyles, $I_2$) d'acrylates d'hydroxyalkyles et/ou de méthacrylates d'hydroxyalkyles et $I_3$) de l'acide acrylique et/ou de l'acide méthacrylique ainsi que $I_4$) d'esters glycidyliques d'acides $\alpha$-alkylalcane-monocarboxyliques et/ou $\alpha,\alpha$-dialkylalcane-monocarboxyliques de formule brute $C_{12-14}H_{22-26}O_3$, reliés par des fonctions esters, et
II) des polyisocyanates et éventuellement des pigmentes et/ou d'autres additifs usuels, caractérisé en ce qu'il contient:
comme composante I) de 60 à 94% en poids de copolymères qui ont été préparés par le procédé de la revendication 1, et
comme composante II) de 6 à 40% en poids de polyisocyanates organiques,
les quantités des composantes I) et II) devant se compléter de manière à former 100% en poids.

10. Matière de revêtement et liant selon la revendication 9, caractérisé en ce qu'il contient de 0,5 à 1,1 groupe —NCO par groupe hydroxy, l'intervalle préféré allant de 0,7 à 1,0 groupe —NCO par groupe hydroxy.